# EUROPEAN PATENT APPLICATION

(11) **EP 3 944 699 A1**
(43) Date of publication of application: **26.01.2022**
(21) Application number: 19920422.3
(22) Date of filing: 20.03.2019
(51) Int. Cl.: H04W 72/12, H04W 28/04

(54) **USER TERMINAL AND WIRELESS COMMUNICATION METHOD**

(71) Applicant: NTT DOCOMO, INC., Chiyoda-Ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); ZHANG, Xiaohong, Beijing 100190 (CN); GUO, Shaozhen, Beijing 100190 (CN); HOU, Xiaolin, Beijing 100190 (CN)
(74) Representative: Hoffmann Eitle
(86) International application number: PCT/JP2019/011910
(87) International publication number: WO 2020/188822

(57) **Abstract**

A user terminal according to an aspect of the present disclosure includes: a receiving section that receives a plurality of pieces of semi-persistent scheduling (SPS) configuration information regarding one cell group; and a control section that controls transmission of a plurality of pieces of delivery confirmation information for a plurality of downlink shared channels, the plurality of pieces of delivery confirmation information respectively received on the basis of the SPS configuration information. According to one aspect of the present disclosure, the HARQ-ACK can be appropriately transmitted even in a case where a plurality of SPS is used.

## Description

### Technical Field

The present disclosure relates to a user terminal and a radio communication method in next-generation mobile communication systems.

### Background Art

In a universal mobile telecommunications system (UMTS) network, specifications of long term evolution (LTE) have been drafted for the purpose of further increasing a data rate, providing low latency, and the like (see Non Patent Literature 1). Further, the specifications of LTE-Advanced (third generation partnership project (3GPP) Release. (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), new radio (NR), and 3GPP Rel. 15 or later) are considered.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In a future radio communication system (for example, NR), transmission and reception based on semi-persistent scheduling (SPS) is used.

The existing Rel-15 NR has a specification in which SPS is not configured for more than one serving cell at the same time per one cell group (that is, one SPS configuration per cell group).

For more flexible control, it has been studied to configure a plurality of SPS (multiple SPS) in one cell group. However, control of the delivery confirmation information (for example, hybrid automatic repeat request acknowledgement (HARQ-ACK)) regarding a plurality of SPS has not yet been studied. If the control is not clearly defined, appropriate HARQ control cannot be performed in a case where a plurality of SPS is used, and the communication throughput may be deteriorated.

In this regard, an object of the present disclosure is to provide a user terminal and a radio communication method capable of appropriately transmitting HARQ-ACK even in a case where a plurality of SPS is used.

### Solution to Problem

A user terminal according to an aspect of the present disclosure includes: a receiving section that receives a plurality of pieces of semi-persistent scheduling (SPS) configuration information regarding one cell group; and a control section that controls transmission of a plurality of pieces of delivery confirmation information for a plurality of downlink shared channels, the plurality of pieces of delivery confirmation information respectively received on the basis of the SPS configuration information.

### Advantageous Effects of Invention

According to one aspect of the present disclosure, the HARQ-ACK can be appropriately transmitted even in a case where a plurality of SPS is used.

### Brief Description of Drawings

Fig. 1 is a diagram illustrating an example of out-of-order HARQ-ACK between SPS.
Fig. 2 is a diagram illustrating an example of out-of-order HARQ-ACK of SPS and dynamic data.
Fig. 3 is a diagram illustrating an example of out-of-order HARQ-ACK of SPS and SPS release.
Fig. 4 is a diagram illustrating an example of out-of-order HARQ-ACK of SPS release and dynamic data.
Fig. 5 is a diagram illustrating another example of the out-of-order HARQ-ACK of SPS release and dynamic data.
Fig. 6 is a diagram illustrating an example of a schematic configuration of a radio communication system according to one embodiment.
Fig. 7 is a diagram illustrating an example of a configuration of a base station according to one embodiment.
Fig. 8 is a diagram illustrating an example of a configuration of a user terminal according to one embodiment.
Fig. 9 is a diagram illustrating an example of a hardware configuration of the base station and the user terminal according to one embodiment.

### Description of Embodiments

In the NR, transmission and reception based on semi-persistent scheduling (SPS) is used. In the present disclosure, the SPS may be replaced with downlink (DL) SPS.

The UE may activate or deactivate (release) the SPS configuration on the basis of a downlink control channel (physical downlink control channel (PDCCH)). On the basis of the activated SPS configuration, the UE may receive a downlink shared channel (physical downlink shared channel (PDSCH)) of the corresponding SPS.

Incidentally, in the present disclosure, the PDCCH may be replaced with downlink control information (DCI) transmitted by using the PDCCH, simply DCI, and so on.

The DCI for activating or deactivating the SPS configuration may be referred to as SPS activation DCI, SPS deactivation DCI, and so on. The SPS deactivation DCI may be referred to as SPS release DCI, simply SPS release, and so on.

The DCI may have cyclic redundancy check CRC bits scrambled by a given RNTI (for example, a configured scheduling radio network temporary identifier (CS-RNTI)).

The SPS configuration (which may be referred to as configuration information regarding the SPS) may be configured in the UE by using higher layer signaling.

In the present disclosure, higher layer signaling may be, for example, any of radio resource control (RRC) signaling, medium access control (MAC) signaling, broadcast information, and the like, or a combination thereof.

For the MAC signaling, for example, a MAC control element (MAC CE), a MAC protocol data unit (PDU), or the like may be used. The broadcast information may be, for example, a master information block (MIB), a system information block (SIB), remaining minimum system information (RMSI), other system information (OSI), and so on.

The configuration (for example, an "SPS-Config" information element of RRC) regarding the SPS may include an index (SPS index) for identifying the SPS, information regarding resources of the SPS, and so on.

The SPS may be configured in a special cell (SpCell) (for example, a primary cell (PCell) or a primary secondary cell (PSCell)) or may be configured in a secondary cell (SCell). However, the existing Rel-15 NR has a specification in which the SPS is not configured for more than one serving cell at the same time per one cell group (that is, one SPS configuration per cell group).

For more flexible control, it has been studied to configure a plurality of SPS (multiple SPS) in one cell group. However, control of the delivery confirmation information (for example, hybrid automatic repeat request acknowledgement (HARQ-ACK)) regarding a plurality of SPS has not yet been studied. If the control is not clearly defined, appropriate HARQ control cannot be performed in a case where a plurality of SPS is used, and the communication throughput may be deteriorated.

In this regard, the present inventors have conceived a method for appropriately transmitting HARQ-ACK even in a case where a plurality of SPS is used.

Hereinafter, embodiments according to the present disclosure will be described in detail with reference to the drawings. A radio communication method according to each of the embodiments may be applied independently, or may be applied in combination with others.

### (Radio Communication Method)

### <First Embodiment>

A first embodiment relates to control of HARQ-ACK for a plurality of SPS PDSCHs.

In the first embodiment, the UE utilizes a plurality of SPS configurations for one or more serving cells. For example, a plurality of active SPS configurations are supported for a given bandwidth part (BWP) of a serving cell. Each SPS configuration may correspond to a different traffic type or service type.

The UE may activate or release one or more SPS configurations on the basis of one DCI (SPS activation DCI or SPS release DCI). Here, which SPS activation or release is instructed may be specified on the basis of at least one of a field of the DCI and a RNTI (for example, CS-RNTI) for scrambling CRC attached to the DCI.

For example, in a case where the SPS configuration includes an SPS index, the UE may activate or release one or more SPS configurations corresponding to the SPS identifier designated by the SPS activation/release DCI. Incidentally, in the present disclosure, the SPS index and the SPS identifier (SPS ID) may be replaced with each other.

The SPS activation/release DCI may also include at least one piece of following information related to HARQ-ACK of the corresponding SPS:
- information (for example, a HARQ process number (HPN), a HARQ process ID) indicating a HARQ process corresponding to the SPS;
- information regarding a PUCCH resource (for example, a PUCCH resource indicator); and
- information regarding timing to feed back (transmit) the HARQ-ACK (for example, a PDSCH-HARQ-ACK feedback timing indicator (PDSCH-to-HARQ_feedback timing indicator)).

A plurality of SPS PDSCHs described below may correspond to different SPS configurations. In a case where the plurality of SPS PDSCHs occur within one slot or over a plurality of slots, the UE may use different uplink control channel (physical uplink control channel (PUCCH)) resources for HARQ-ACK for each of the plurality of SPS PDSCHs.

In a case where the plurality of SPS PDSCHs occur within one slot or across a plurality of slots, the UE may multiplex the bits of the HARQ-ACK corresponding to the plurality of SPS PDSCHs in the same HARQ-ACK codebook and transmit by using the same PUCCH resource. In this case, the PUCCH resource may be decided on the basis of a specific SPS PDSCH (for example, the last SPS PDSCH, the first SPS PDSCH) reception among the SPS PDSCH receptions associated with the HARQ-ACK codebook.

Note that the size (payload size) of the total HARQ-ACK for the plurality of SPS PDSCHs may be configured by higher layer signaling. Further, at least one of the PUCCH resource and the PUCCH format for each HARQ-ACK may be configured by higher layer signaling.

The UE may transmit the HARQ-ACK feedback by using one PUCCH resource in units of HARQ-ACK codebooks configured by one or more HARQ-ACK bits (also referred to as HARQ-ACK information, HARQ-ACK information bit, or the like). The HARQ-ACK codebook may be simply referred to as a codebook.

Here, the HARQ-ACK codebook may include bits for HARQ-ACK in at least one unit of a time domain (for example, a slot), a frequency domain (for example, a component carrier (CC)), a spatial domain (for example, a layer), a transport block (TB), and a code block group (CBG) configuring the TB.

Note that the number (size) of bits or the like included in the HARQ-ACK codebook may be decided in a semi-static or dynamic manner. The HARQ-ACK codebook of which the size is decided in a semi-static manner is also referred to as a semi-static HARQ-ACK codebook, a type-1 HARQ-ACK codebook, or the like. The HARQ-ACK codebook of which the size is decided in a dynamic manner is also referred to as a dynamic HARQ-ACK codebook, a type-2 HARQ-ACK codebook, or the like.

Whether to use the semi-static HARQ-ACK codebook or the dynamic HARQ-ACK codebook may be configured in the UE by higher layer parameters (for example, pdsch-HARQ-ACK-Codebook).

In the case of the semi-static HARQ-ACK codebook, the UE may feed back, in a given range, HARQ-ACK bits corresponding to the given range regardless of the presence or absence of PDSCH scheduling. The given range may be referred to as a given window period, a HARQ-ACK window, a HARQ-ACK bundling window, a HARQ-ACK feedback window, or the like.

The sequence of the bits of the HARQ-ACK codebook may be decided by applying the following rules (1) to (3) in any order:
(1) an earlier SPS occasion first;
(2) a lower CC first (in other words, a carrier having a smaller CC index); and
(3) a lower SPS index first.

The UE may be configured with PUCCH resources for SPS by higher layer signaling to accommodate HARQ-ACK bits for one or more SPS PDSCHs. The PUCCH resource for SPS (resource for HARQ-ACK) may be configured by, for example, an RRC parameter "n1-PUCCH-AN", and the PUCCH format corresponding to the resource may be at least one of PUCCH formats 0, 1, 2, 3, and 4.

In the existing Rel-15 NR, the number of bits of the HARQ-ACK transmitted using the resource is small, and thus the PUCCH format corresponding to "n1-PUCCH-AN" is limited to the PUCCH format 0 or 1. However, in a case where a plurality of SPS is configured as in the present disclosure, the number of bits of the HARQ-ACK may increase, and it is not possible to cope with the PUCCH format 0 or 1.

In a case where the plurality of SPS PDSCHs occur within one slot or over a plurality of slots, the UE may bundle HARQ-ACK corresponding to the plurality of SPS PDSCHs into a given number (for example, 1) of bits and transmit the HARQ-ACK by using one PUCCH resource. In this case, the PUCCH resource may be decided on the basis of a specific SPS PDSCH (for example, the last SPS PDSCH, the first SPS PDSCH) reception among the SPS PDSCH receptions associated with the bundled HARQ-ACK bit.

Here, the bundling of the plurality of pieces of HARQ-ACK may be taking the AND of the plurality of HARQ-ACK bits and generating a given number of bits of HARQ-ACK. The bundling of the plurality of pieces of HARQ-ACK may be performed in at least one of a time domain (for example, a plurality of SPS opportunities configured by the same SPS configuration information), a frequency domain (for example, a plurality of carriers or a plurality of BWPs), and a plurality of pieces of SPS configuration information.

The UE may transmit the HARQ-ACK by using the PUCCH in response to the reception of the SPS activation/deactivation DCI. The UE may transmit the HARQ-ACK by using an MAC CE in response to the reception of the SPS activation/deactivation DCI. The MAC CE may be expressed by 0 bits.

It may be assumed that the UE does not transmit the HARQ-ACK in response to the reception of one or more SPS PDSCHs (HARQ feedback for the SPS PDSCH is omitted).

The UE may transmit the HARQ-ACK on the basis of a given trigger in response to the reception of one or more SPS PDSCHs. For example, the trigger may be a higher layer signaling (for example, MAC CE) or physical layer signaling (for example, DCI). Such a HARQ-ACK reporting method may be referred to as polling of SPS HARQ-ACK feedback for multi-SPS reception.

The HARQ-ACK transmitted on the basis of the trigger may be HARQ-ACK corresponding to all the SPS configurations to be configured, or may be HARQ-ACK corresponding to an SPS PDSCH within a given period.

The UE may transmit the HARQ-ACK for the one or more SPS PDSCHs by using at least one of the PUCCH, the PUSCH, and the MAC CE on the basis of the trigger for the SPS

### PDSCH.

The resource to be used for transmission of HARQ-ACK for a plurality of SPS PDSCHs may be configured by using higher layer signaling or may be instructed by DCI (for example, the given trigger). The resource to be used for transmission of HARQ-ACK for a plurality of SPS PDSCHs may be configured in the UE by using a parameter different from (independent of) the above-described "n1-PUCCH-AN".

In a case where all the SPS PDSCHs of the SPS configuration (for example, all SPS configurations) to be reported are received when the given trigger is received, the UE may feed back the HARQ-ACK corresponding to each SPS PDSCH. On the other hand, in a case where not all the SPS PDSCHs of the SPS configuration to be reported are received when the given trigger is received, the UE may transmit NACK for all the SPS PDSCHs, may transmit ACK for all the SPS PDSCHs, or may transmit only HARQ-ACK corresponding to the received SPS PDSCH.

According to the first embodiment described above, even in a case where a plurality of SPS is configured, the UE can appropriately transmit the HARQ-ACK by using a given PUCCH resource.

### <Second Embodiment>

A second embodiment relates to control such as reception processing of a plurality of SPS PDSCHs.

For example, a case is considered in which there are a first PDSCH and a second PDSCH in an active BWP of a certain serving cell, and HARQ-ACK related to the second PDSCH with a HARQ process ID x (where x ≠ y) received after the first PDSCH with a HARQ process ID y is transmitted before HARQ-ACK of the first PDSCH.

This case may be referred to as an out-of-order (OOO) PDSCH-HARQ-ACK flow, an out-of-order HARQ-ACK, or the like since the order of the PDSCH and the order of the corresponding HARQ-ACK are reversed.

Here, the first PDSCH and the second PDSCH may be replaced with a first SPS PDSCH and a second SPS PDSCH, respectively. Further, the first PDSCH and the second PDSCH may be replaced with an SPS PDSCH and a dynamic PDSCH

(may be referred to as PDSCH scheduled by DCI, dynamic grant-based PDSCH, or the like.), respectively.

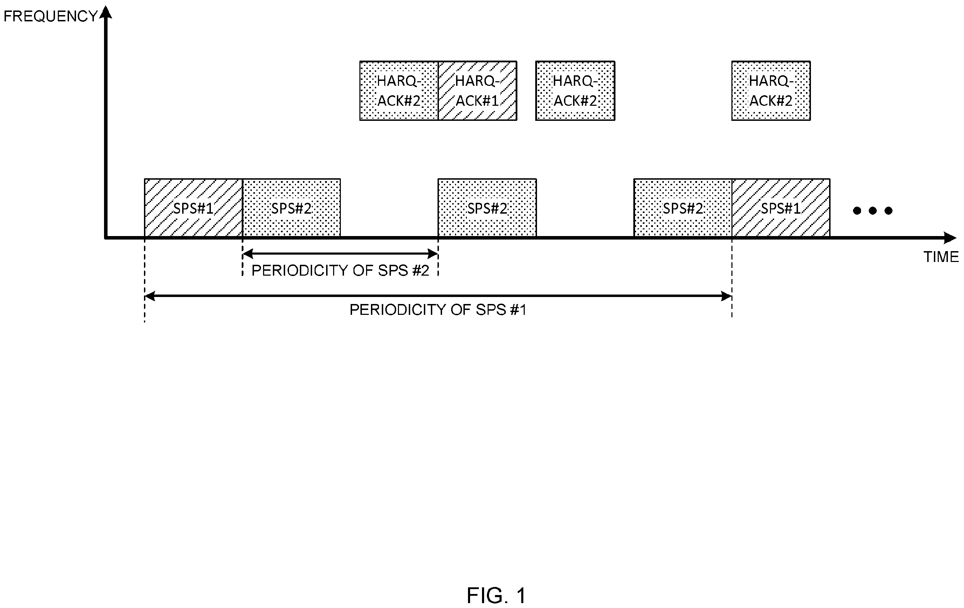

Fig. 1 is a diagram illustrating an example of out-of-order HARQ-ACK between SPS. In this example, SPS #1 (SPS PDSCH #1) corresponding to HARQ process ID #1 and SPS #2 (SPS PDSCH #2) corresponding to HARQ process ID #2 are already activated. The periodicity of the SPS #1 is assumed to be longer than the periodicity of the SPS #2, but is not limited thereto.

In Fig. 1, HARQ-ACK #2 related to the SPS #2 with the HARQ process ID #2 received after the SPS #1 with the HARQ process ID #1 is transmitted before HARQ-ACK #1 related to the SPS #1, and thus corresponds to the out-of-order HARQ-ACK.

Incidentally, in this example, the frequency at which the SPS or the like is received and the frequency at which the HARQ-ACK is transmitted are different from each other, but the present invention is not limited thereto, and these may be transmitted and received at the same (or overlapping) frequency. The same applies to the drawings described later.

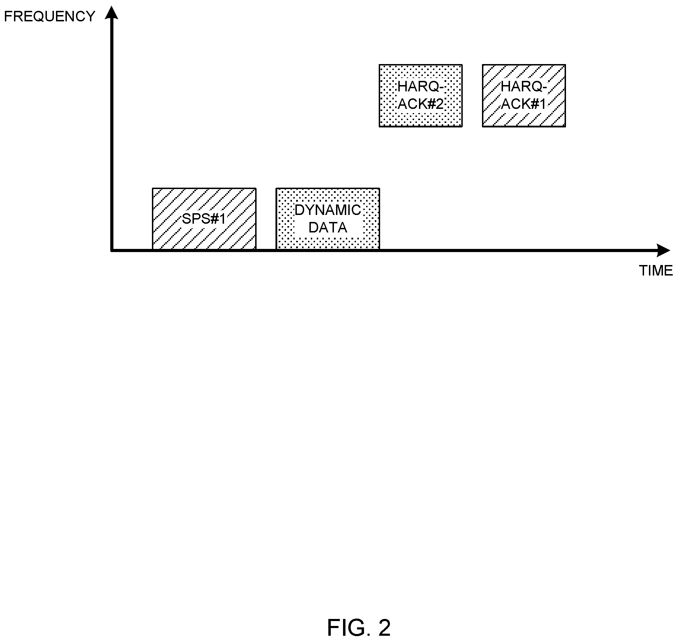

Fig. 2 is a diagram illustrating an example of out-of-order HARQ-ACK of SPS and dynamic data. In this example, the SPS (SPS PDSCH) corresponding to the HARQ process ID #1 and the dynamic data (dynamic grant-based PDSCH) corresponding to the HARQ process ID #2 are illustrated.

In Fig. 2, the HARQ-ACK #2 related to the dynamic data with the HARQ process ID #2 received after the SPS #1 with the HARQ process ID #1 is transmitted before the HARQ-ACK #1 related to the SPS #1, and thus corresponds to the out-of-order HARQ-ACK.

Although not illustrated in Fig. 2, a case where the HARQ-ACK #1 related to the SPS #1 of the HARQ process ID #1 received after the dynamic data with HARQ process ID #2 is transmitted before the HARQ-ACK #2 related to the dynamic data with the HARQ process ID #2 also corresponds to the out-of-order HARQ-ACK.

In general, it is preferable to process or report the HARQ-ACK corresponding to the signal (channel) in the order of reception of the signal (channel). Therefore, in order to control the occurrence of the out-of-order HARQ-ACK, the UE may operate according to at least one of the following policies for the above-described case. Incidentally, the UE may decide which policy to follow on the basis of higher layer signaling (for example, RRC), physical layer signaling (for example, DCI), or a combination thereof.

In Policy 1, the UE always processes the second PDSCH. The UE may or may not drop processing of the first PDSCH. Note that the drop in the present disclosure may mean that processing is not performed or may mean that processing is terminated. For a dropped PDSCH, the UE may generate a NACK as a corresponding HARQ-ACK feedback, or may not generate the corresponding HARQ-ACK feedback.

In Policy 2, the UE may process both the first PDSCH and the second PDSCH. The UE reports, to the base station, whether both the first PDSCH and the second PDSCH can be processed as UE capability. The base station may apply Policy 2 in a case where the UE capability is reported.

In Policy 3, the UE may process both the first PDSCH and the second PDSCH under specific conditions. The UE may report the specific conditions as the UE capability. The UE may apply Policy 3 in a case where the UE has a specific UE capability (for example, a capability of carrier aggregation). This is because the UE having the capability of carrier aggregation can simultaneously decode a plurality of PDSCHs. For example, the UE having a UE capability of implementing carrier aggregation including two component carriers can simultaneously process two PDSCHs on different carriers and thus can simultaneously process the two PDSCHs even on the same carrier. In a case where a specific condition is not satisfied, the operation of the UE may not be defined, or the first PDSCH or the second PDSCH may be processed.

In Policy 4, the UE drops processing of the first PDSCH. The UE may always drop the processing of the first PDSCH or may drop the processing in a case where a given condition (for example, a scheduling condition) is not satisfied. The scheduling condition may be defined by at least one of the number of RBs, the number of TBS, the number of layers, an interval (offset, gap) between the first PDSCH and the second PDSCH, an interval (offset, gap) between a plurality of PUCCHs which transmit the HARQ-ACK corresponding to each PDSCH, and the like.

After decoding the downlink control channel (physical downlink control channel (PDCCH)) related to the first PDSCH and the second PDSCH, the UE operation (for example, deciding whether to drop the first PDSCH, a timing capability for the second PDSCH) may be decided or fixed.

When dropping the first PDSCH, the UE may increase or decrease the minimum PDSCH processing procedure time (also referred to as N₁) of the second PDSCH by a given time (for example, d symbol (d is an integer)). The given time may be configured in the UE by using higher layer signaling, or may be determined on the basis of a specific capability of the UE.

Note that the drop of the processing of the first PDSCH may be performed by dropping the first PDSCH of the same serving cell, or may be performed by dropping one or more PDSCHs of the same cell or different serving cells.

In a case where the UE can support the out-of-order HARQ-ACK (the out-of-order HARQ-ACK is applicable), the UE may expect that an out-of-order HARQ-ACK flow is a given number (for example, 1) at most in an active BWP of a given serving cell.

The operation of the out-of-order HARQ-ACK may or may not be allowed for a gap between the PDSCH to the HARQ-ACK that matches the PDSCH processing time (for example, N₁) for a specific capability.

### [Modification of out-of-order HARQ-ACK]

For a case where at least one of overlapping of processing timelines and overlapping of resources occurs between the SPS release PDCCH (DCI) and the PDSCH (for example, SPS PDSCH, dynamic PDSCH), the UE may treat this case as the out-of-order HARQ-ACK or may not treat this case as the out-of-order HARQ-ACK.

In a case where the case is treated as an out-of-order application target, the UE may replace one of the first PDSCH and the second PDSCH in the second embodiment with the SPS release PDCCH (DCI) and perform processing.

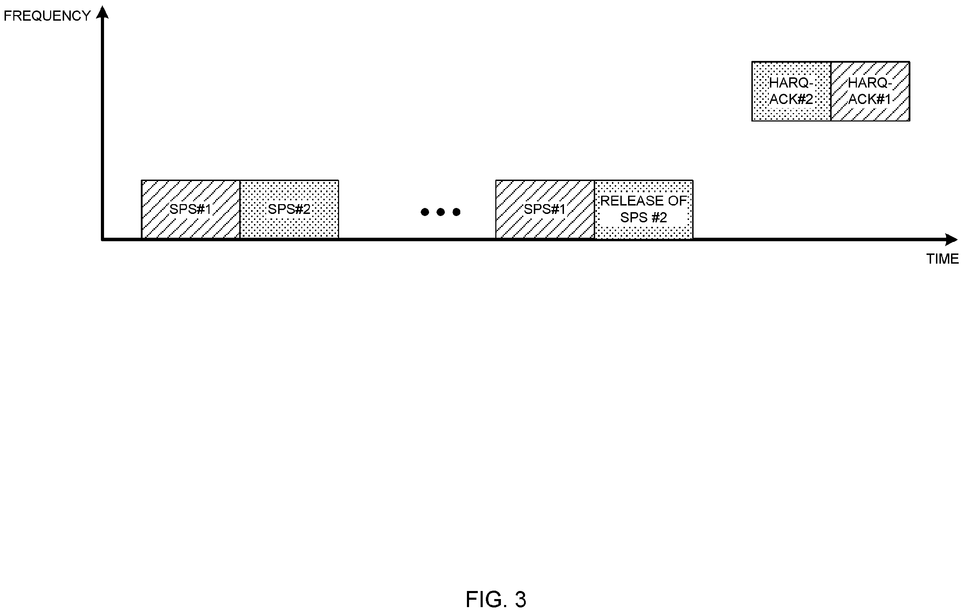

Fig. 3 is a diagram illustrating an example of an out-of-order HARQ-ACK of SPS and SPS release. In this example, the SPS #1 (SPS PDSCH #1) corresponding to the HARQ process ID #1 and the SPS #2 (SPS PDSCH #2) corresponding to the HARQ process ID #2 are activated, and the UE is notified of the SPS release for the SPS #2 in the drawing.

In Fig. 3, the HARQ-ACK #2 related to the SPS release of the SPS #2 with the HARQ process ID #2 received after the SPS #1 with the HARQ process ID #1 is transmitted before the HARQ-ACK #1 related to the SPS #1, and thus corresponds to the out-of-order HARQ-ACK.

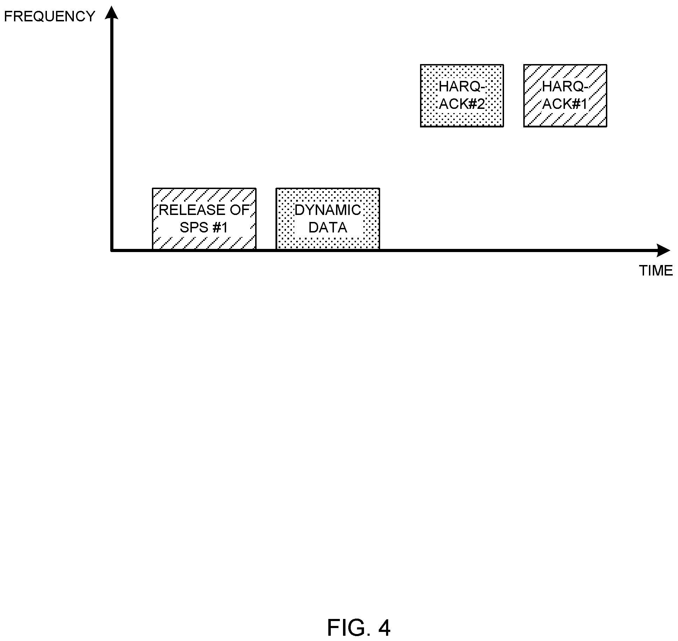

Fig. 4 is a diagram illustrating an example of an out-of-order HARQ-ACK of SPS release and dynamic data. In this example, SPS release for SPS (SPS PDSCH) corresponding to the HARQ process ID #1 and dynamic data (dynamic grant-based PDSCH) corresponding to the HARQ process ID #2 are illustrated.

In Fig. 4, the HARQ-ACK #2 related to the dynamic data of the HARQ process ID #2 received after the SPS release of the SPS #1 of the HARQ process ID #1 is transmitted before the HARQ-ACK #1 related to the SPS release of the SPS #1, and thus corresponds to the out-of-order HARQ-ACK.

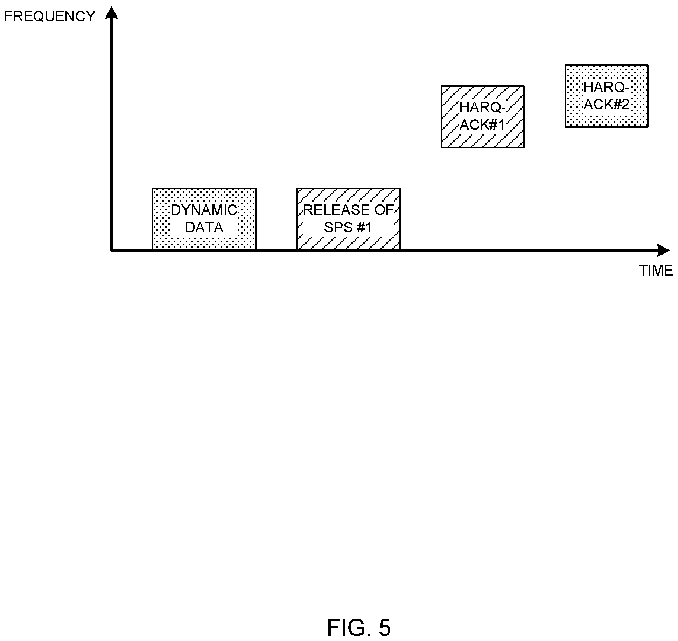

Fig. 5 is a diagram illustrating another example of the out-of-order HARQ-ACK of SPS release and dynamic data. In this example, SPS release for SPS (SPS PDSCH) corresponding to the HARQ process ID #1 and dynamic data (dynamic grant-based PDSCH) corresponding to the HARQ process ID #2 are illustrated.

In Fig. 5, the HARQ-ACK #1 related to the SPS release of the SPS #1 of the HARQ process ID #1 received after the dynamic data of the HARQ process ID #2 is transmitted before the HARQ-ACK #2 related to the dynamic data of the HARQ process ID #2, and thus corresponds to the out-of-order HARQ-ACK.

### [Control during Collision of Resource of SPS]

Even in a case where the resources of two active SPSs collide (overlap) in the time domain, the UE may process (for example, reception processing) both SPSs in a case where the resources of the two SPSs do not collide (overlap) in the frequency resource (frequency domain). Note that whether or not to perform the processing may be decided on the basis of a given UE capability (for example, a capability of supporting simultaneous reception of a plurality of SPS resources). For example, the UE having the capability or transmitting the information of the capability may process overlapping SPS resources in the time domain.

Otherwise (that is, in a case where the time resources and the frequency resources of the two SPSs overlap, or a case where the UE does not have the capability), the UE may perform control to preferentially process the SPS with a higher priority. The UE may drop the SPS processing (for example, decoding) with a lower priority. The UE may or may not transmit the HARQ-ACK of the lower priority SPS (transmission may be omitted).

Note that the priority of the SPS may be configured by higher layer signaling. For example, for a priority (priority level) of a given SPS configuration, the UE may be configured with explicit parameters or with implicit parameters (for example, a modulation and coding scheme (MCS) table, an RNTI, a configuration index (SPS index), and a time domain resource).

The priority of the SPS may be instructed by the SPS activation DCI. For example, for the priority (priority level) of a given SPS configuration, the UE may be explicitly designated by a given field (for example, a priority field) of the DCI or implicitly designated by a given field (for example, an MCS field, a time domain resource assignment field).

Note that even in a case where the resources of the two active SPSs collide (overlap) in the time domain, and the resources of the two SPSs collide (overlap) in the frequency domain, the UE may process (for example, reception processing) both the SPSs on the basis of the given UE capability.

The UE may not expect that an out-of-order case occurs (such a schedule is made) for a plurality of SPS PDSCHs respectively corresponding to different HARQ process IDs, as long as the UE does not report (or does not support) given capability information (which may be referred to as capability information regarding processing of SPS PDSCH). In other words, the UE which reports the given capability information can handle the out-of-order case for the plurality of SPS PDSCHs respectively corresponding to different HARQ process IDs.

For the UE which reports the given capability information, the network may allow the plurality of SPS PDSCHs respectively corresponding to different HARQ process IDs to be implemented out-of-order.

Note that the given capability information described above may include at least one of the following:
- a number (for example, the maximum number and the minimum number supported) regarding the SPS PDSCH within a given period of time of the processing;
- a number (for example, the maximum number and the minimum number) regarding the HARQ process occupied by the SPS PDSCH; and
- a HARQ-ACK bit number (for example, the maximum number and the minimum number) regarding the SPS PDCH transmitted per given unit (for example, a slot, a PUCCH resource).

Note that the plurality of SPS PDSCHs described here may be replaced with a case (for example, an SPS PDSCH and SPS release) of another out-of-order HARQ-ACK as described in Figs. 2 to 5.

According to the second embodiment described above, even in a case where a plurality of SPS is configured, the PDSCH reception processing and the like corresponding to the plurality of SPS can be appropriately controlled.

### <Others>

Note that although some capabilities (capability information) appear in the above-described embodiments, the capabilities may be replaced with a capability indicating that out-of-order HARQ-ACK between dynamic grant PDSCHs is supported, or may be replaced with a capability indicating that simultaneous reception of a plurality of dynamic grant PDSCHs is supported.

Further, the capability of each of the above-described embodiments may be replaced with a capability (for example, a capability indicating that out-of-order HARQ-ACK between SPS is supported (or a capability indicating that simultaneous reception of a plurality of SPS is supported)) different from the capability indicating that out-of-order HARQ-ACK between dynamic grant PDSCHs is supported (or the capability indicating that simultaneous reception of a plurality of dynamic grant PDSCHs is supported.

Further, in the SPS described in each of the above embodiments, an example is described in which activation or release is controlled by the DCI, but the SPS is not limited thereto. The SPS may be activated or deactivated by the SPS configuration information, and activation or deactivation based on the DCI may not be controlled.

### (Radio Communication System)

Hereinafter, a configuration of a radio communication system according to one embodiment of the present disclosure will be described. In this radio communication system, communication is performed using one or a combination of the radio communication methods according to the embodiments of the present disclosure.

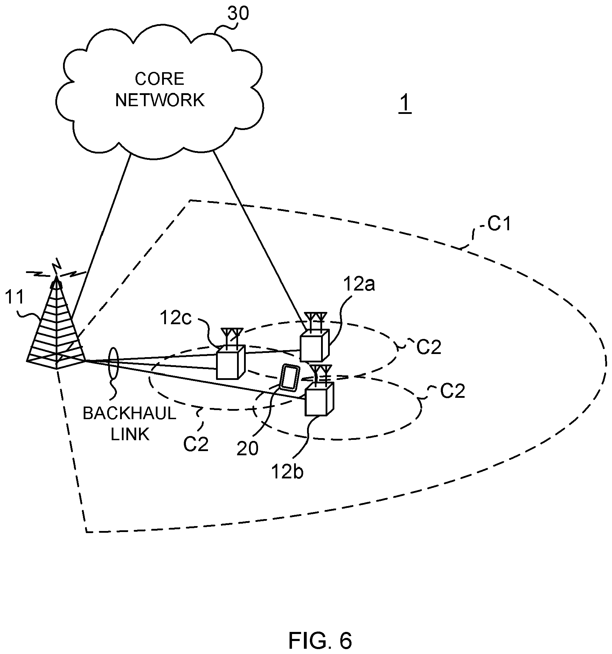

Fig. 6 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA Dual Connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as base stations 10 unless specified otherwise.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range 1 (FR1) and a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited thereto, and, for example, FR1 may correspond to a frequency range higher than FR2.

Further, the user terminal 20 may perform communication in each CC using at least one of time division duplex (TDD) and frequency division duplex (FDD).

The plurality of base stations 10 may be connected by wire (for example, an optical fiber or an X2 interface in compliance with common public radio interface (CPRI)) or wirelessly (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a downlink shared channel (physical downlink shared channel (PDSCH)) shared by each user terminal 20, a broadcast channel (physical broadcast channel (PBCH)), a downlink control channel (physical downlink control channel (PDCCH)), or the like may be used.

Further, in the radio communication system 1, as an uplink channel, an uplink shared channel (physical uplink shared channel (PUSCH)) shared by each user terminal 20, an uplink control channel (physical uplink control channel (PUCCH)), a random access channel (physical random access channel (PRACH)), or the like may be used.

User data, higher layer control information, and a system information block (SIB) and the like are transmitted by the PDSCH. The PUSCH may transmit user data, higher layer control information, and the like. Further, the PBCH may transmit a master information block (MIB).

The PDCCH may transmit lower layer control information. The lower layer control information may include, for example, downlink control information (DCI) including scheduling information of at least one of the PDSCH and the PUSCH.

Note that DCI for scheduling the PDSCH may be referred to as DL assignment, DL DCI, or the like, and DCI for scheduling the PUSCH may be referred to as UL grant, UL DCI, or the like. Note that the PDSCH may be replaced with DL data, and the PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or a plurality of search spaces. The UE may monitor the CORESET associated with a certain search space on the basis of search space configuration.

One search space may correspond to a PDCCH candidate corresponding to one or a plurality of aggregation levels. One or a plurality of search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (which may be referred to as, for example, hybrid automatic repeat request acknowledgement (HARQ-ACK), ACK/NACK, or the like), scheduling request (SR), and the like may be transmitted by the PUCCH. By means of the PRACH, a random access preamble for establishing a connection with a cell may be transmitted.

Note that in the present disclosure, downlink, uplink, and the like may be expressed without "link". Further, various channels may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be, for example, at least one of a primary synchronization signal (PSS) and a secondary synchronization signal (SSS). A signal block including SS (PSS or SSS) and PBCH (and DMRS for PBCH) may be referred to as an SS/PBCH block, an SS Block (SSB), and the like. Note that the SS, the SSB, or the like may also be referred to as a reference signal.

Further, in the radio communication system 1, a sounding reference signal (SRS), a demodulation reference signal (DMRS), and the like may be transmitted as an uplink reference signal (UL-RS). Note that, the DMRS may be referred to as a "user terminal-specific reference signal (UE-specific reference signal)".

### (Base Station)

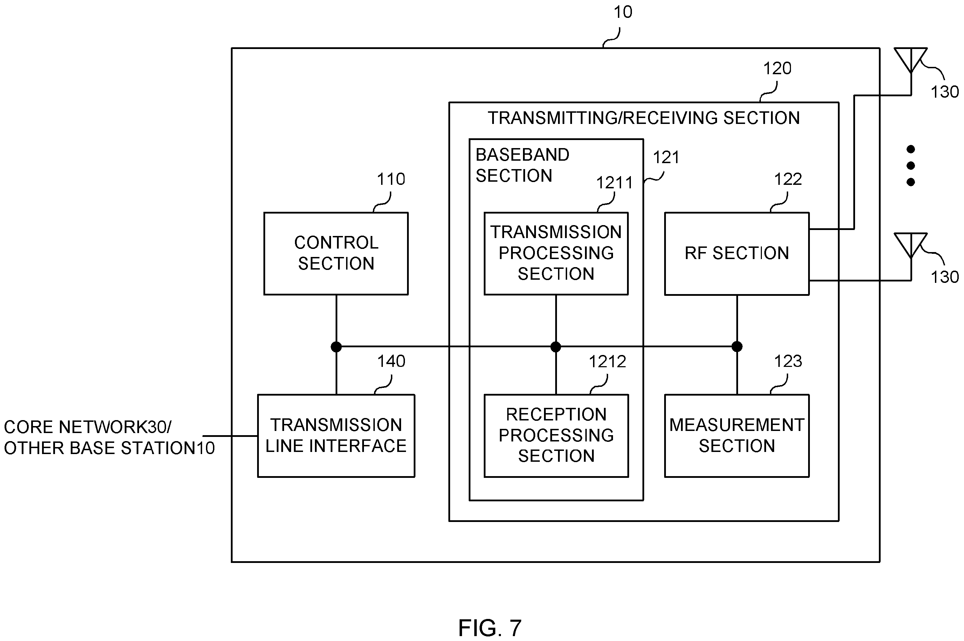

Fig. 7 is a diagram illustrating an example of a configuration of a base station according to one embodiment. The base station 10 includes a control section 110, a transmitting/receiving section 120, a transmitting/receiving antenna 130, and a transmission line interface 140. Note that one or more of the control sections 110, one or more of the transmitting/receiving sections 120, one or more of the transmitting/receiving antennas 130, and one or more of the transmission line interfaces 140 may be included.

Note that, although this example primarily indicates functional blocks of characteristic parts of the present embodiment, it may be assumed that the base station 10 has other functional blocks that are necessary for radio communication as well. A part of processing of each section described below may be omitted.

The control section 110 controls the entire base station 10. The control section 110 can be configured by a controller, a control circuit, or the like, which is described on the basis of common recognition in the technical field to which the present disclosure relates.

The control section 110 may control signal generation, scheduling (for example, resource assignment or mapping), and the like. The control section 110 may control transmitting/receiving, measurement, and the like using the transmitting/receiving section 120, the transmitting/receiving antenna 130, and the transmission line interface 140. The control section 110 may generate data to be forwarded as a signal, control information, a sequence, and the like, and may forward the data, the control information, the sequence, and the like to the transmitting/receiving section 120. The control section 110 may perform call processing (such as configuration or release) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be configured by a transmitter/receiver, an RF circuit, a base band circuit, a filter, a phase shifter, a measurement circuit, a transmitting/receiving circuit, and the like, which are described on the basis of common recognition in the technical field to which the present disclosure relates.

The transmitting/receiving section 120 may be configured as an integrated transmitting/receiving section, or may be constituted by a transmitting section and a receiving section. The transmitting section may be configured by the transmission processing section 1211 and the RF section 122. The receiving section may be configured by the reception processing section 1212, the RF section 122, and the measurement section 123.

The transmitting/receiving antenna 130 can be configured by an antenna described on the basis of common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data or control information acquired from the control section 110 to generate a bit string to be transmitted.

The transmitting/receiving section 120 (transmission processing section 1211) may perform transmission processing such as channel encoding (which may include error correcting encoding), modulation, mapping, filtering processing, discrete Fourier transform (DFT) processing (if necessary), inverse fast Fourier transform (IFFT) processing, precoding, or digital-analog transform on the bit string to be transmitted, and may output a base band signal.

The transmitting/receiving section 120 (RF section 122) may perform modulation to a radio frequency band, filtering processing, amplification, and the like on the base band signal, and may transmit a signal in the radio frequency band via the transmitting/receiving antenna 130.

On the other hand, the transmitting/receiving section 120 (RF section 122) may perform amplification, filtering processing, demodulation to a base band signal, and the like on the signal in the radio frequency band received by the transmitting/receiving antenna 130.

The transmitting/receiving section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correcting decoding), MAC layer processing, RLC layer processing, or PDCP layer processing on the acquired base band signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like on the basis of the received signal. The measurement section 123 may measure received power (for example, reference signal received power (RSRP)), received quality (for example, reference signal received quality (RSRQ), a signal to interference plus noise ratio (SINR), or a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmitting section and the receiving section of the base station 10 in the present disclosure may be configured by at least one of the transmitting/receiving section 120, the transmitting/receiving antenna 130, and the transmission line interface 140.

Note that the transmitting/receiving section 120 may transmit a plurality of pieces of semi-persistent scheduling (SPS) configuration information regarding one cell group to the user terminal 20. The transmitting/receiving section 120 may receive, from the user terminal 20, one or a plurality of pieces of delivery confirmation information (HARQ-ACK) for a plurality of downlink shared channels (SPS PDSCH) respectively received on the basis of the SPS configuration information.

### (User Terminal)

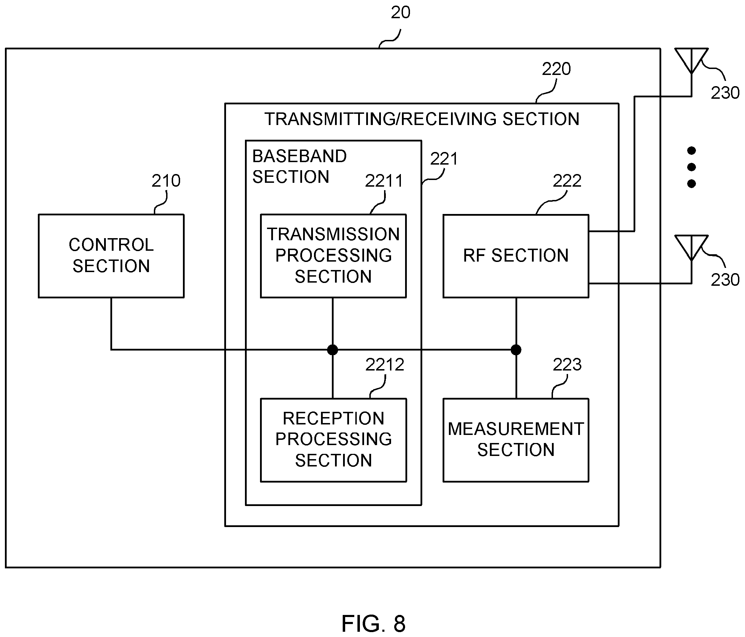

Fig. 8 is a diagram illustrating an example of a configuration of a user terminal according to one embodiment. The user terminal 20 includes a control section 210, a transmitting/receiving section 220, and a transmitting/receiving antenna 230. Note that one or more of the control sections 210, one or more of the transmitting/receiving sections 220, and one or more of the transmitting/receiving antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can be configured by a controller, a control circuit, or the like, which is described on the basis of common recognition in the technical field to which the present disclosure relates.

The control section 210 may control signal generation, mapping, and the like. The control section 210 may control transmitting/receiving, measurement, and the like using the transmitting/receiving section 220 and the transmitting/receiving antenna 230. The control section 210 may generate data to be transmitted as a signal, control information, a sequence, and the like, and may forward the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be configured by a transmitter/receiver, an RF circuit, a base band circuit, a filter, a phase shifter, a measurement circuit, a transmitting/receiving circuit, and the like, which are described on the basis of common recognition in the technical field to which the present disclosure relates.

The transmitting/receiving section 220 may be configured as an integrated transmitting/receiving section, or may be configured by a transmitting section and a receiving section. The transmitting section may be configured by the transmission processing section 2211 and the RF section 222. The receiving section may be constituted by the reception processing section 2212, the RF section 222, and the measurement section 223.

The transmitting/receiving antenna 230 can be configured by an antenna described on the basis of common recognition in the technical field to which the present disclosure relates, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data acquired from the control section 210 or control information to generate a bit string to be transmitted.

The transmitting/receiving section 220 (transmission processing section 2211) may perform transmission processing such as channel encoding (which may include error correcting encoding), modulation, mapping, filtering processing, DFT processing (if necessary), IFFT processing, precoding, or digital-analog transform on a bit string to be transmitted, and may output a base band signal.

Note that whether or not to apply DFT processing may be determined on the basis of configuration of transform precoding. When transform precoding is enabled for a channel (for example, PUSCH), the transmitting/receiving section 220 (transmission processing section 2211) may perform DFT processing as the transmission processing in order to transmit the channel using a DFT-s-OFDM waveform. When transform precoding is not enabled for a channel (for example, PUSCH), the transmitting/receiving section 220 (transmission processing section 2211) may not perform DFT processing as the transmission processing.

The transmitting/receiving section 220 (RF section 222) may perform modulation to a radio frequency band, filtering processing, amplification, and the like on the base band signal, and may transmit a signal in the radio frequency band via the transmitting/receiving antenna 230.

On the other hand, the transmitting/receiving section 220 (RF section 222) may perform amplification, filtering processing, demodulation to a base band signal, and the like on the signal in the radio frequency band received by the transmitting/receiving antenna 230.

The transmitting/receiving section 220 (reception processing section 2212) may acquire user data and the like by applying reception processing such as analog-digital transform, FFT processing, IDFT processing (if necessary), filtering processing, demapping, demodulation, decoding (which may include error correcting decoding), MAC layer processing, RLC layer processing, or PDCP layer processing on the acquired base band signal.

The transmitting/receiving section 220 (measurement section 223) may perform measurement on the received signal. For example, the measurement section 223 may perform RRM measurement, CSI measurement, and the like on the basis of the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 and the transmitting/receiving antenna 230.

Incidentally, the transmitting/receiving section 220 may receive a plurality of pieces of semi-persistent scheduling (SPS) configuration information regarding one cell group. For example, the plurality of pieces of SPS configuration information may be all related to one BWP, all related to one cell, or all related to a plurality of cells included in one cell group.

The control section 210 may control transmission of one or a plurality of pieces of delivery confirmation information (HARQ-ACK) for a plurality of downlink shared channels (SPS PDSCH) respectively received on the basis of the SPS configuration information.

For a first downlink shared channel and a second downlink shared channel corresponding to different SPS configuration information and different hybrid automatic repeat request (HARQ) process numbers, in a case where the second downlink shared channel is received after the first downlink shared channel, and delivery confirmation information regarding the second downlink shared channel is transmitted before delivery confirmation information regarding the first downlink shared channel (that is, this corresponds to the case of out-of-order HARQ-ACK), the control section 210 may control the reception processing of the first downlink shared channel and the second downlink shared channel.

In a case where the first downlink shared channel and the second downlink shared channel corresponding to different SPS configuration information overlap each other in the time domain, and the user terminal 20 has a given capability (for example, a capability of supporting simultaneous reception of a plurality of SPS resources), the transmitting/receiving section 220 may perform reception processing of both the first downlink shared channel and the second downlink shared channel.

### (Hardware Configuration)

Note that the block diagrams that have been used to describe the above embodiments illustrate blocks in functional units. These functional blocks (configuration units) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (using wire, wireless, or the like, for example) and using these plural apparatuses. The functional blocks may be implemented by combining software with the above-described single apparatus or the above-described plurality of apparatuses.

Here, the function includes, but is not limited to, determining, deciding, judging, calculating, computing, processing, deriving, investigating, searching, ascertaining, receiving, transmitting, outputting, accessing, solving, selecting, choosing, establishing, comparing, assuming, expecting, considering, broadcasting, notifying, communicating, forwarding, configuring, reconfiguring, allocating, mapping, and assigning. For example, a functional block (configuration unit) that causes transmission to function may be referred to as a transmitting unit, a transmitter, and the like. In any case, as described above, the implementation method is not particularly limited.

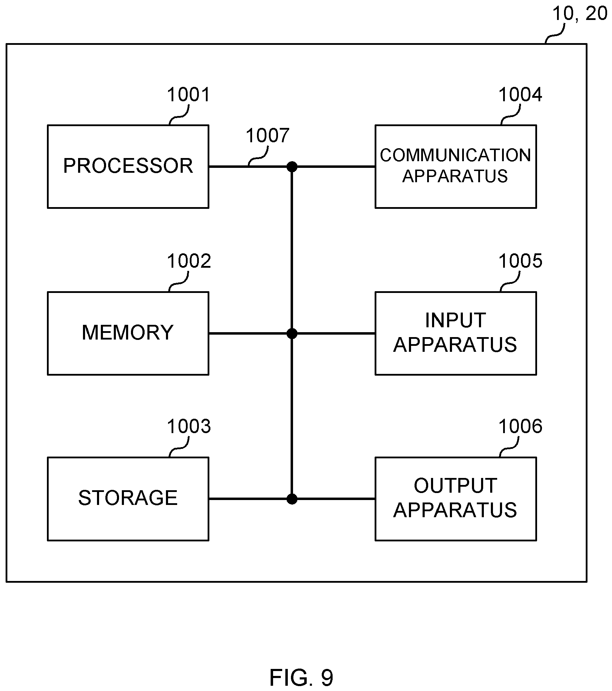

For example, the base station, the user terminal, and the like according to one embodiment of the present disclosure may function as a computer that executes the processing of the radio communication method of the present disclosure. Fig. 9 is a diagram illustrating an example of a hardware configuration of the base station and the user terminal according to one embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be configured to include one or a plurality of apparatuses illustrated in the drawings, or may be configured without including some apparatuses.

For example, although only one processor 1001 is illustrated, a plurality of processors may be provided. Further, the processing may be executed by one processor, or the processing may be executed in sequence or using other different methods simultaneously by two or more processors. Note that the processor 1001 may be implemented with one or more chips.

Each function of the base station 10 and the user terminal 20 is implemented by the processor 1001. For example, the processor 1001 performs operations by causing a given software (program) to be read on hardware such as the memory 1002 to control communication via the communication apparatus 1004 and control at least one of reading and writing of data in the memory 1002 and the storage 1003.

The processor 1001 may control the whole computer by, for example, operating an operating system. The processor 1001 may be configured by a central processing unit (CPU) including an interface with peripheral equipment, a control device, an operation device, a register, and the like. For example, at least a part of the above-described control section 110 (210), transmitting/receiving section 120 (220), and the like may be implemented by the processor 1001.

The processor 1001 reads a program (program code), a software module, data, and the like from at least one of the storage 1003 and the communication apparatus 1004 into the memory 1002, and executes various pieces of processing in according therewith. As the program, a program to cause a computer to execute at least a part of the operation described in the above-described embodiment is used. For example, the control section 110 (210) may be implemented by a control program that is stored in the memory 1002 and operates in the processor 1001, and another functional block may be implemented similarly.

The memory 1002 is a computer-readable recording medium, and may be configured by, for example, at least one of a read only memory (ROM), an erasable programmable ROM (EPROM), an electrically EPROM (EEPROM ), a random access memory (RAM) and/or other appropriate storage media. The memory 1002 may be referred to as a "register", a "cache", a "main memory (primary storage apparatus)", and the like. The memory 1002 can store a program (program code), a software module, and the like, which are executable for implementing the radio communication method according to one embodiment of the present disclosure.

The storage 1003 is a computer-readable recording medium, and may be configured by, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, a key drive), a magnetic stripe, a database, a server, and other appropriate storage media. The storage 1003 may be referred to as an auxiliary storage apparatus.

The communication apparatus 1004 is hardware (transmitting/receiving device) for allowing inter-computer communication by using at least one of a wired network and a wireless network, and may be referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120 (220), the transmitting/receiving antenna 130 (230), and the like described above may be implemented by the communication apparatus 1004. The transmitting/receiving section 120 (220) may be implemented by physically or logically separating a transmitting section 120a (220a) and a receiving section 120b (220b) from each other.

The input apparatus 1005 is an input device for receiving input from the outside (for example, a keyboard, a mouse, a microphone, a switch, a button, a sensor, and the like). The output apparatus 1006 is an output device that performs output to the outside (for example, a display, a speaker, a light emitting diode (LED) lamp, and the like). Note that the input apparatus 1005 and the output apparatus 1006 may be provided in an integrated structure (for example, a touch panel).

Each apparatus such as the processor 1001 and the memory 1002 is connected by the bus 1007 for communicating information. The bus 1007 may be configured by a single bus, or may be configured by buses that vary between apparatuses.

The base station 10 and the user terminal 20 may include hardware such as a microprocessor, a digital signal processor (DSP), an application specific integrated circuit (ASIC), a programmable logic device (PLD), and a field programmable gate array (FPGA), and a part or all of each functional block may be implemented by the hardware. For example, the processor 1001 may be implemented with at least one of these pieces of hardware.

### (Modification)

Note that terms described in the present disclosure and terms necessary for understanding the present disclosure may be replaced with terms that have the same or similar meanings. For example, a channel, a symbol, and a signal (signal or signaling) may be replaced interchangeably. Further, the signal may be a message.
The reference signal can be abbreviated as an RS, and may be referred to as a pilot, a pilot signal and the like, depending on which standard applies. Further, a component carrier (CC) may be referred to as a cell, a frequency carrier, a carrier frequency, and the like.

A radio frame may include one or a plurality of periods (frames) in a time domain. Each of the one or plurality of periods (frames) included in the radio frame may be referred to as a subframe. Further, the subframe may include one or more slots in the time domain. The subframe may be a fixed time length (for example, 1 ms) not dependent on numerology.

Here, the numerology may be a communication parameter applied to at least one of transmission and reception of a signal or a channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, specific windowing processing performed by a transceiver in the time domain, and the like.

A slot may be configured by one or a plurality of symbols in the time domain (orthogonal frequency division multiplexing (OFDM) symbols, single carrier frequency division multiple access (SC-FDMA) symbols, and the like). Also, a slot may be a time unit based on the numerology.

A slot may include a plurality of mini slots. Each mini slot may include one or a plurality of symbols in the time domain. Further, the mini slot may be referred to as a sub slot. Each mini slot may include fewer symbols than a slot. PDSCH (or PUSCH) transmitted in a time unit larger than a mini slot may be referred to as PDSCH (PUSCH) mapping type A. A PDSCH (or PUSCH) transmitted using a mini slot may be referred to as PDSCH (PUSCH) mapping type B.

A radio frame, a subframe, a slot, a mini slot and a symbol all represent the time unit in signal communication. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of contiguous subframes may be referred to as TTI, or one slot or one mini slot may be referred to as TTI. That is, at least one of the subframe and TTI may be a subframe (1 ms) in the existing LTE, may be a period shorter than 1 ms (for example, one to thirteen symbols), or may be a period longer than 1 ms. Note that the unit to represent the TTI may be referred to as a slot, a mini slot or the like, instead of a subframe.

Here, a TTI refers to the minimum time unit of scheduling in radio communication, for example. For example, in the LTE system, a base station performs scheduling to allocate radio resources (a frequency bandwidth and transmission power that can be used in each user terminal and the like) to each user terminal in TTI units. Note that the definition of TTIs is not limited to this.

The TTI may be a transmission time unit of channelencoded data packets (transport blocks), code blocks, codewords, or the like, or may be a unit of processing in scheduling, link adaptation, and so on. Note that, when the TTI is given, a time interval (for example, the number of symbols) to which the transport block, code block, codeword, or the like is actually mapped may be shorter than the TTI.

Note that, when one slot or one mini slot is referred to as a TTI, one or more TTIs (that is, one or more slots or one or more mini slots) may be the minimum time unit of scheduling. Further, the number of slots (the number of mini slots) configuring the minimum time unit of scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI that is shorter than the usual TTI may be referred to as a shortened TTI, a short TTI, a partial TTI (or fractional TTI), a shortened subframe, a short subframe, a mini slot, a sub slot, a slot, and the like.

Note that a long TTI (for example, a usual TTI, a subframe, or the like) may be replaced with a TTI having a time length exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of contiguous subcarriers in the frequency domain. The number of subcarriers included in the RB may be the same regardless of the numerology, and may be twelve, for example. The number of subcarriers included in the RB may be decided on the basis of the numerology.

Further, the RB may include one or a plurality of symbols in the time domain, and may have a length of one slot, one mini slot, one subframe, or one TTI. One TTI, one subframe, and the like each may be configured by one or a plurality of resource blocks.

Note that one or a plurality of RBs may be referred to as a physical resource block (physical RB (PRB)), a subcarrier group (SCG), a resource element group (REG), a PRB pair, an RB pair, or the like.

Further, a resource block may include one or a plurality of resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. The PRB may be defined in a certain BWP and be numbered within the BWP.

The BWP may include BWP for UL (UL BWP) and BWP for DL (DL BWP). For the UE, one or a plurality of BWPs may be configured within one carrier.

At least one of the configured BWPs may be active, and it may not be assumed that the UE transmits and receives a given signal/channel outside the active BWP. Note that cell, carrier, and the like in the present disclosure may be replaced with BWP.

Note that the structures of the above-described radio frame, subframe, slot, mini slot, symbol, and the like are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the length of cyclic prefix (CP), and the like can be variously changed.

Further, the information, parameters, and the like described in the present disclosure may be represented using absolute values or relative values with respect to given values, or may be represented using other corresponding information. For example, a radio resource may be instructed by a given index.

The names used for parameters and the like in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using any of a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Information, signals, and the like can be output at least one of from higher layer to lower layer and from lower layer to higher layer. Information, signals, and the like may be input and output via a plurality of network nodes.

The information, signals, and the like that are input and output may be stored in a specific location (for example, in a memory), or may be managed using a management table. The information, signal, and the like to be input and output can be overwritten, updated or appended. The output information, signal, and the like may be deleted. The information, signals, and the like that are input may be transmitted to another apparatus.

Notification of information may be performed not only by using the aspects/embodiments described in the present disclosure but also using another method. For example, notification of information in the present disclosure may be performed by using physical layer signaling (for example, downlink control information (DCI), uplink control information (UCI)), higher layer signaling (for example, radio resource control (RRC) signaling, broadcast information (master information block (MIB), system information block (SIB), or the like), medium access control (MAC) signaling), another signal, or a combination thereof.

Note that the physical layer signaling may be referred to as layer 1/layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of MAC signaling may be performed using, for example, a MAC control element (MAC CE).

Further, notification of given information (for example, notification of "being X") is not limited to explicit notification but may be performed implicitly (for example, by not performing notification of the given information or by performing notification of another piece of information).

Judging may be performed using values represented by one bit (0 or 1), may be performed using Boolean values represented by true or false, or may be performed by comparing numerical values (for example, comparison with a given value).

Regardless of whether referred to as software, firmware, middleware, microcode, or hardware description language, or referred to by other names, software should be broadly interpreted so as to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, instruction, information, and the like may be transmitted/received via a transmission medium. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology and the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be interchangeably used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or a plurality of (for example, three) cells. In a case where the base station accommodates a plurality of cells, the entire coverage area of the base station can be partitioned into a plurality of smaller areas, and each smaller area can provide communication services through a base station subsystem (for example, small remote radio head (RRH) for indoors). The term "cell" or "sector" refers to a part or the whole of a coverage area of at least one of a base station and a base station subsystem that perform a communication service in this coverage.

In the present disclosure, the terms such as "mobile station (MS)", "user terminal (user terminal)", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other appropriate terms.

At least one of the base station and the mobile station may be referred to as a transmission apparatus, a reception apparatus, a radio communication apparatus, and the like. Note that at least one of the base station and the mobile station may be a device mounted on a moving object, a moving object itself, and the like. The moving object may be a transportation (for example, a car, an airplane and the like), an unmanned moving object (for example, a drone, an autonomous car, and the like), or a (manned or unmanned) robot. Note that at least one of the base station and the mobile station also includes an apparatus that does not necessarily move during a communication operation. For example, at least one of the base station and the mobile station may be an Internet of Things (IoT) device such as a sensor.

The base station in the present disclosure may be replaced with a user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In the case, the user terminal 20 may have the function of the above-described base station 10. Further, terms such as "uplink" and "downlink" may be replaced with terms corresponding to communication between terminals (for example, "side"). For example, the uplink channel, the downlink channel, and the like may be replaced with a side channel.

Similarly, the user terminal in the present disclosure may be replaced with a base station. In this case, the base station 10 may be configured to have the above-described functions of the user terminal 20.

In the present disclosure, the operation performed by the base station may be performed by an upper node thereof in some cases. In a network including one or a plurality of network nodes including the base station, it is clear that various operations performed to communicate with terminals may be performed by the base station, one or a plurality of network nodes other than the base station (for example, mobility management entity (MME), servinggateway (S-GW), and the like are conceivable, but there is no limitation), or a combination thereof.

Each aspect/embodiment described in the present disclosure may be used alone, used in combination, or switched in association with execution. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. Further, a plurality of systems may be combined (for example, a combination of LTE or LTE-A and 5G) and applied.

The term "on the basis of" used in the present disclosure does not mean "only on the basis of" unless otherwise specified. In other words, the term "on the basis of" means both "only on the basis of" and "at least on the basis of".

Any reference to an element using designations such as "first" and "second" used in the present disclosure does not generally limit the amount or order of these elements. These designations may be used in the present disclosure only for convenience, as a method for distinguishing between two or more elements. In this way, reference to the first and second elements does not imply that only two elements may be employed, or that the first element must precede the second element in some way.

The term "determining (deciding)" used in the present disclosure may include a wide variety of operations. For example, "determining (deciding)" may be regarded as "determining (deciding)" of judging, calculating, computing, processing, deriving, investigating, looking up, search, inquiry (for example, looking up in a table, database, or another data structure), ascertaining, and the like.

Further, "determining (deciding)" may be regarded as "determining (deciding)" of receiving (for example, receiving information), transmitting (for example, transmitting information), input, output, accessing (for example, accessing data in a memory), and the like.

Further, "determining (deciding)" may be regarded as "determining" of resolving, selecting, choosing, establishing, comparing, and the like. That is, "determining (deciding)" may be regarded as "determining (deciding)" some operations.

Further, "determining (deciding)" may be replaced with "assuming", "expecting", "considering", and the like.

The "maximum transmission power" described in the present disclosure may mean a maximum value of transmission power, the nominal UE maximum transmit power, or the rated UE maximum transmit power.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in a radio frequency domain, a microwave domain, and an optical (both visible and invisible) domain, or the like.

In the present disclosure, the description of "A and B are different" may mean "A and B are different from each other". Note that the description may mean that "A and B are different from C". The terms such as "separated", "coupled", and the like may be interpreted as "different".

When the terms such as "include", "including", and variations of these are used in the present disclosure, these terms are intended to be inclusive, in a manner similar to the way the term "comprising" is used. Further, the term "or" as used in the present disclosure is intended to be not an exclusive-OR.

In the present disclosure, for example, when translations add articles, such as a, an, and the in English, the present disclosure may include that the noun that follows these articles is in the plural.

Now, although the invention according to the present disclosure has been described in detail above, it is obvious to a person skilled in the art that the invention according to the present disclosure is by no means limited to the embodiments described in the present disclosure.
The invention according to the present disclosure can be embodied with various corrections and in various modified aspects, without departing from the spirit and scope of the invention defined on the basis of the description of claims. Therefore, the description in the present disclosure is provided for the purpose of describing examples, and thus, should by no means be construed to limit the invention according to the present disclosure in any way.

## Claims

1. A user terminal comprising:
a receiving section that receives a plurality of pieces of semi-persistent scheduling (SPS) configuration information regarding one cell group; and
a control section that controls transmission of a plurality of pieces of delivery confirmation information for a plurality of downlink shared channels, the plurality of pieces of delivery confirmation information respectively received on the basis of the SPS configuration information.

2. The user terminal according to claim 1, wherein
for a first downlink shared channel and a second downlink shared channel corresponding to different SPS configuration information and different hybrid automatic repeat request (HARQ) process numbers, the control section controls reception processing of the first downlink shared channel and the second downlink shared channel in a case where the second downlink shared channel is received after the first downlink shared channel, and delivery confirmation information regarding the second downlink shared channel is transmitted before delivery confirmation information regarding the first downlink shared channel.

3. The user terminal according to claim 1 or 2, wherein
in a case where the first downlink shared channel and the second downlink shared channel corresponding to different SPS configuration information overlap in a time domain, and the user terminal has a given capability, the receiving section performs reception processing of both the first downlink shared channel and the second downlink shared channel.

4. A radio communication method of a user terminal comprising:
receiving a plurality of pieces of semi-persistent scheduling (SPS) configuration information regarding one cell group; and
controlling transmission of a plurality of pieces of delivery confirmation information for a plurality of downlink shared channels, the plurality of pieces of delivery confirmation information respectively received on the basis of the SPS configuration information.
